# EUROPEAN PATENT APPLICATION

(11) **EP 4 611 351 A1**
(43) Date of publication of application: **03.09.2025**
(21) Application number: 23887682.5
(22) Date of filing: 26.09.2023
(51) Int. Cl.: H04L 67/5683, G06F 16/332

(54) **INFORMATION STORAGE METHOD AND APPARATUS, ELECTRONIC DEVICE, AND STORAGE MEDIUM**

(30) Priority: 09.11.2022 CN 202211401041
(71) Applicant: Beijing Oppo Telecommunications Corp., Ltd., Beijing 100125 (CN)
(72) Inventor: WANG, Yuan, Beijing 100125 (CN)
(74) Representative: Penza, Giancarlo
(86) International application number: PCT/CN2023/121677
(87) International publication number: WO 2024/098989

(57) **Abstract**

An information storage method and apparatus, an electronic device, and a storage medium. The information storage method comprises: displaying a chat interface with a virtual session object; acquiring chat information inputted in the chat interface; and if the chat information meets a memory addition condition, storing memory information corresponding to the chat information. According to the method, users can conveniently store memory information which needs to be stored, and the interaction experience of the users is improved.

## Description

### CROSS-REFERENCE OF RELATED APPLICATION

The application claims priority to Chinese Patent Application No. 202211401041.2, filed on November 09, 2022, the entire disclosure of which is incorporated herein by reference for all purposes.

### TECHNICAL FIELD

The disclosure relates to the technical field of electronic devices, and particularly to an information storage method and apparatus, an electronic device and a storage medium.

### BACKGROUND

With a rapid improvement of technology and living standards, electronic devices (such as smart phones, and tablet computers) have become one of the commonly used electronic products in people's lives. In practical use, users usually have a need to use the electronic devices to record relevant information.

### SUMMARY

Embodiments of the disclosure provide an information storage method and apparatus, an electronic device and a storage medium.

In a first aspect, the embodiments of the disclosure provide the information storage method. The method includes: displaying a chat interface configured to chat with a virtual session object; acquiring a chat message input in the chat interface; and in response to the chat message satisfying a memorization addition condition, storing memorization information corresponding to the chat message.

In a second aspect, the embodiments of the disclosure provide the information storage apparatus. The information storage apparatus includes a chat interface displaying module, a chat message acquiring module, and a memorization information storing module. The chat interface displaying module is used to display a chat interface configured to chat with a virtual session object; the chat message acquiring module is used to acquire a chat message input in the chat interface; and the memorization information storing module is used to store, in response to the chat message satisfying a memorization addition condition, memorization information corresponding to the chat message.

In a third aspect, the embodiments of the disclosure provide the electronic device. The electronic device includes: one or more processors, a memory, and one or more programs. The one or more programs are stored in the memory and are configured to be executed by the one or more processors, and the one or more programs are configured to execute the information storage method according to the first aspect.

In a fourth aspect, the embodiments of the disclosure provide the computer-readable storage medium. The computer-readable storage medium has program codes stored thereon, where the program codes are callable by a processor to execute the information storage method according to the first aspect.

### BRIEF DESCRIPTION OF THE DRAWINGS

In order to more clearly illustrate technical solutions in the embodiments of the disclosure, drawings to be used in the embodiments are briefly described below. Apparently, the following drawings are merely some embodiments of the disclosure, and those skilled in the art can obtain other drawings according to these drawings without paying any creative effort.
FIG. 1 is a flowchart of an information storage method according to an embodiment of the disclosure.
FIG. 2 is a schematic diagram illustrating an interface according to some embodiments of the disclosure.
FIG. 3 is a schematic diagram illustrating another interface according to the embodiments of the disclosure.
FIG. 4 is a schematic diagram illustrating yet another interface according to the embodiments of the disclosure.
FIG. 5 is a flowchart of an information storage method according to another embodiments of the disclosure.
FIG. 6 is a schematic diagram illustrating still another interface according to the embodiments of the disclosure.
FIG. 7 is a flowchart of an information storage method according to yet another embodiment of the disclosure.
FIG. 8 is a schematic diagram illustrating still yet another interface according to the embodiments of the disclosure.
FIG. 9 is a flowchart of an information storage method according to still another embodiment of the disclosure.
FIG. 10 is a schematic diagram illustrating still yet another interface according to the embodiments of the disclosure.
FIG. 11 is a flowchart of the information storage method according to still yet another embodiment of the disclosure.
FIG. 12 is a schematic diagram illustrating still yet another interface according to the embodiments of the disclosure.
FIG. 13 is a schematic diagram illustrating still yet another interface according to the embodiments of the disclosure.
FIG. 14 is a schematic diagram illustrating still yet another interface according to the embodiments of the disclosure.
FIG. 15 is a schematic diagram illustrating still yet another interface according to the embodiments of the disclosure.
FIG. 16 is a flowchart of an information storage method according to still yet another embodiment of the disclosure.
FIG. 17 is a block diagram of an information storage apparatus according to some embodiments of the disclosure.
FIG. 18 is a block diagram of an electronic device for executing the information storage method according to some embodiments of the disclosure.
FIG. 19 is a diagram of a storage unit for storing or carrying program codes for realizing the information storage method according to some embodiments of the disclosure.

### DETAILED DESCRIPTION OF PREFERRED EMBODIMENTS

In order to make those skilled in the art better understand the technical schemes of the disclosure, the technical schemes in the embodiments of the disclosure will be described clearly and comprehensively with reference to the drawings in the embodiments of the disclosure.

As people often encounters a situation of forgetting some matters in work and life, they often use electronic devices to save information that needs to be recorded. Usually, when people save the information that needs to be recorded, a memo function of the electronic devices is used to save the information. However, the memo function requires users to manually enter the information that needs to be recorded, and the users can only manually retrieve the recorded information. Therefore, there is a problem of cumbersome operation, which is not convenient for the users to use.

Certainly, as voice assistants are increasingly used in various electronic devices, people can realize voice interaction with the electronic devices through the voice assistants without interacting with the electronic devices by means of traditional touch control. In addition, the user can use the voice assistants to assist in information recording. However, at present, a degree of intelligence of information recording through the voice assistant is not high, resulting in a poor interactive experience of the user.

In view of the above problems, the inventor has proposed an information storage method and apparatus, an electronic device and a storage medium according to the embodiments of the application, which can actively record memorization (memory, or memorized) information that a user needs to save when the user is chatting with a virtual session object. In this way, it is convenient for the user to store the memorization information that needs to be saved, and it can enhance entertaining of the user in saving the memorization information, thereby enhancing the interactive experience of the user. The information storage method is described in detail in the subsequent embodiments.

The embodiments of the disclosure provide the information storage method. The method includes: a chat interface configured to chat with the virtual session object is displayed, a chat message input in the chat interface is acquired, and memorization information corresponding to the chat message is stored in response to the chat message satisfying the memorization addition condition.

According to the embodiments of the disclosure, storing the memorization information corresponding to the chat message in response to the chat message satisfying the memorization addition condition, includes: identifying a keyword in the chat message; and in response to the keyword in the chat message including a preset keyword, storing the memorization information corresponding to the chat message, where the preset keyword is used to trigger addition of memorization information.

According to the embodiments of the disclosure, storing the memorization information corresponding to the chat message in response to the keyword in the chat message including the preset keyword, includes: in response to the keyword in the chat message including the preset keyword, obtaining, as first target information, information other than the preset keyword in the chat message; obtaining, by performing natural language processing on the first target information, structured information of the first target information as first structured information; and storing the first target information and the first structured information.

According to the embodiments of the disclosure, storing the first target information and the first structured information, includes: storing the first target information and the first structured information associated in an associated manner.

According to the embodiments of the disclosure, after storing the first target information and the first structured information in the associated manner, the method further includes: in response to a first information query operation, querying, from stored memorization information, first target information matching the first information query operation; generating first query answer information according to first structured information associated with the first target information; and outputting the first query answer information and the queried first target information.

According to the embodiments of the disclosure, storing the memorization information corresponding to the chat message in response to the chat message satisfying the memorization addition condition, further includes: in response to the keyword in the chat message not including the preset keyword, obtaining, by performing natural language processing on the chat message, structured information of the chat message as second structured information; and in response to the second structured information satisfying a preset information condition, storing the memorization information corresponding to the chat message.

According to the embodiments of the disclosure, the preset information condition includes:
the second structured information includes a preset entity; and/or
the second structured information includes a preset entity attribute.

According to the embodiments of the disclosure, storing the memorization information corresponding to the chat message in response to the second structured information satisfying the preset information condition, includes: in response to the second structured information satisfying the preset information condition, storing the chat message and the second structured information.

According to the embodiments of the disclosure, storing the chat message and the second structured information in response to the second structured information satisfying the preset information condition, includes: in response to the second structured information satisfying the preset information condition, storing the chat message and the second structured information in an associated manner.

According to the embodiments of the disclosure, after storing the chat message and the second structured information in the associated manner in response to the second structured information satisfying the preset information condition, the method further includes: in response to a second information query operation, querying, from stored memorization information, a chat message matching the second information query operation; generating second query answer information according to second structured information associated with the queried chat message; and outputting the second query answer information and the queried chat message.

According to the embodiments of the disclosure, the method further includes: displaying a setting interface, where the setting interface is configured to set the preset keyword; and in response to a setting operation in the setting interface, acquiring a set keyword as the preset keyword used to trigger the addition of memorization information.

According to the embodiments of the disclosure, after storing the memorization information corresponding to the chat message in response to the chat message satisfying the memorization addition condition, the method further includes: displaying, based on the memorization information, response content information of the virtual session object in the chat interface, where the response content information is used to reply to the chat message, and prompt that the memorization information has been stored.

According to the embodiments of the disclosure, the response content information includes question information used to query the memorization information, and displaying, based on the memorization information, response content information of the virtual session object in the chat interface, includes: generating the question information based on the memorization information; and generating, based on the question information, the response content information, and displaying the response content information in the chat interface, where the response content information is used to reply to the chat message, and the response content information is further used to prompt that the memorization information has been stored and prompt that the memorization information is capable of being queried by using the question information.

According to the embodiments of the disclosure, after storing the memorization information corresponding to the chat message in response to the chat message satisfying the memorization addition condition, the method further includes: displaying, based on the memorization information, a memorization card for the memorization information in the chat interface.

According to the embodiments of the disclosure, the memorization card includes an editing control, and after displaying, based on the memorization information, the memorization card for the memorization information in the chat interface, the method further includes: in response to a first operation on the editing control, displaying an editing interface for the memorization information; and in response to an editing operation for the memorization information in the editing interface, acquiring and storing edited memorization information.

According to the embodiments of the disclosure, before displaying the editing interface for the memorization information in response to the first operation on the editing control, the method further includes: in response to the memorization information satisfying a preset missing condition, displaying a first prompt message in the memorization card, where the first prompt message is used to prompt edition for the memorization information.

According to the embodiments of the disclosure, after storing the memorization information corresponding to the chat message in response to the chat message satisfying the memorization addition condition, the method further includes: in response to a chat condition for the memorization information being met, displaying the chat interface with the virtual session object, and displaying topic information corresponding to the memorization information in the chat interface, where the topic information is used to initiate a chat related to the memorization information.

The information storage method provided in the embodiments of the disclosure is described in detail below with reference to the drawings.

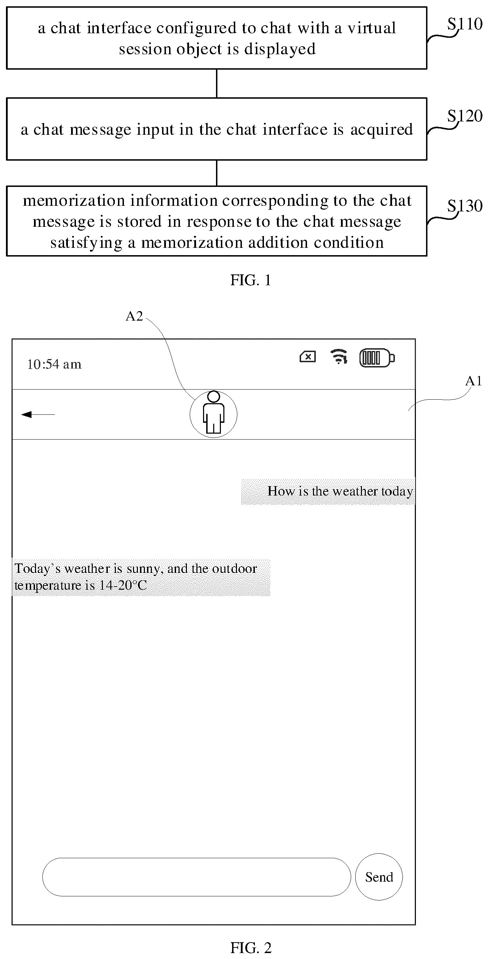

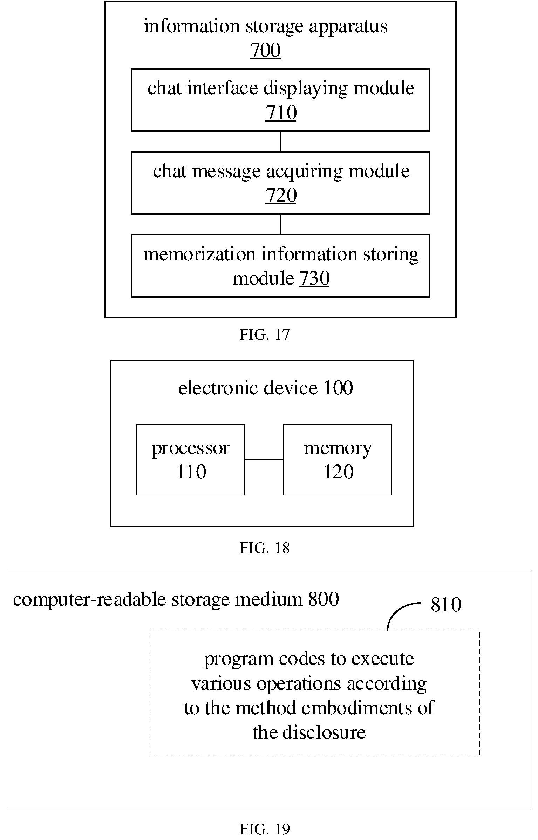

Referring to FIG. 1, FIG. 1 is a flowchart of the information storage method according to an embodiment of the disclosure. In a specific embodiment, the information storage method is implemented by an information storage apparatus 700, as illustrated in FIG. 17, and an electronic device 100 (as illustrated in FIG. 18) equipped with the information storage apparatus 700. The specific process of the embodiment will be described below taking the electronic device as an example. Certainly, it may be understood that the electronic device used in the embodiments may be a smart phone, a tablet computer, a smart watch, an e-book, etc., which is not limited here. Details for the process illustrated in FIG. 1 will be described below, and the information storage method may specifically include operations as follows.

At S110, a chat interface configured to chat with a virtual session object is displayed.

In some embodiments of the disclosure, the electronic device may display the chat interface configured to chat with the virtual session object. The virtual session object may be a virtual object constructed by the electronic device for interacting with a user, and the virtual object in a chat scenario may be referred to the virtual session object.

In some implementations, the virtual session object may be a virtual object corresponding to a voice assistant of the electronic device. It may be understood that, for the user to interact with the voice assistant, the voice assistant of the electronic device usually has a corresponding virtual object. By displaying the chat interface configured to chat with the virtual object, the user can perform operations through the voice assistant. Certainly, the virtual session object may also be other virtual objects preset for interacting with the user, which is not limited here. For example, a chat application with a pre-built virtual session object is installed in the electronic device. The user may have a virtual chat with the virtual session object based on a chat interface of the chat application, so as to pass the user's free time, or to perform the user's required operations in the chat application, for example, to help the user save information that needs to be recorded.

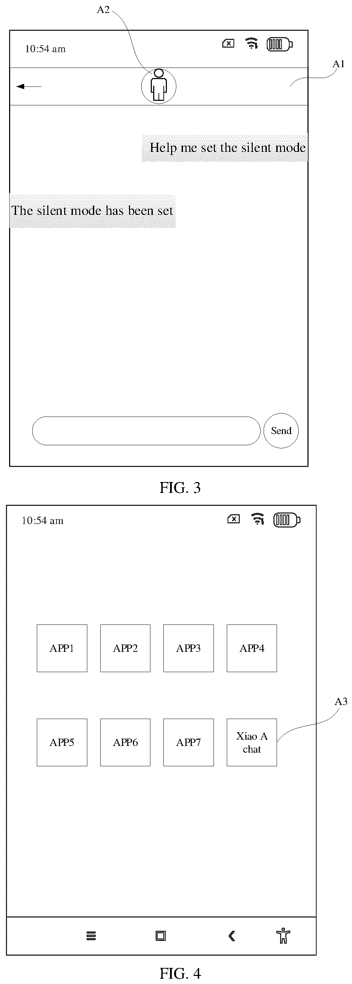

In a possible implementation, when the virtual session object is the virtual object corresponding to the voice assistant of the electronic device, it is possible to perform information query, set relevant functions of the electronic device, save information to be recorded, and the like, based on a chat message input by the user in the chat interface. Exemplarily, referring to FIG. 2, FIG. 2 is a schematic diagram of a chat interface A1 provided in some embodiments of the disclosure. The chat interface A1 is an interface used for chatting between a user and a virtual session object A2, in which the virtual session object A2 is the virtual object corresponding to the voice assistant of the electronic device. For example, as illustrated in FIG. 2, the user inputs a chat message "How is the weather today". In this case, the electronic device may respond to the chat message by displaying a response content of the virtual session object A2 in the chat interface A1 as "Today's weather is sunny, and the outdoor temperature is 14-20°C". For another example, as illustrated in FIG. 3, the user inputs "Help me set the silent mode". In this case, the electronic device may respond to the chat message and set the electronic device to the "silent mode". In addition, the electronic device may display a response content of the virtual session object A2 in the chat interface A1 as "The silent mode has been set". Certainly, the above-described chat scenarios with the virtual object corresponding to the voice assistant are only examples, and the chat scenarios with the virtual object corresponding to the voice assistant are not limited thereto.

In some implementations, the electronic device may display the chat interface configured to chat with the virtual session object in response to a chat operation, where the chat operation is used to trigger a chat with the virtual session object.

In a possible implementation, when the virtual session object is the virtual object corresponding to the voice assistant, the electronic device may display an application interface of the voice assistant. In response to detecting an operation for triggering a chat with the virtual session object in the application interface, the electronic device may display the chat interface configured to chat with the virtual session object. The electronic device may display the application interface of the voice assistant, according to voice information input by the user for waking up the voice assistant. Alternatively, the electronic device may display the application interface of the voice assistant in response to a trigger operation performed on an application icon of the voice assistant. The specific manners for triggering the application interface of the voice assistant may not be limited.

In another possible implementation, the electronic device may display an application icon of an application for the chat interface. When the electronic device detects an operation for the application icon, the electronic device may start the application, and display the above chat interface while running the application.

In some alternative implementations, the application may be a chat application dedicated to chatting with the voice assistant, that is, the chat application is only used to chat with the virtual session object of the voice assistant. In response to detecting the trigger operation for the application icon of the chat application, the chat application is controlled to run in the foreground, and the chat interface configured to chat with the virtual object of the voice assistant is displayed. Exemplarily, a name of the voice assistant of the electronic device is Xiao A, and the electronic device may be installed with an application "Xiao A Chat". As illustrated in FIG. 4, the electronic device may display an application icon A3 of "Xiao A Chat" in a main interface. In response to detecting a trigger operation on the application icon A3, the electronic device may execute the application "Xiao A Chat", and display a chat interface configured to chat with the virtual session object "Xiao A".

In some alternative implementations, the application is a chat application which enables chatting. When the electronic device detects a trigger operation on an icon of the chat application, the electronic device may control the chat application to run in the foreground and display an address book interface. The address book interface may include a virtual session object, and in response to detecting a chat operation with the virtual session object, a chat interface configured to chat with the virtual session object is displayed.

In another possible implementation, the above virtual session object is the virtual object of the voice assistant, an application for helping users store information to be recorded may be installed in the electronic device, and such application includes a preset function of inputting to-be-stored information through a chat with the virtual session object. The electronic device may display an application interface of the application in response to a trigger operation on the application icon of the application. In response to detecting a trigger operation directed at the above preset function in the application interface, a chat interface configured to chat with the above virtual session object may be displayed. Exemplarily, a name of the voice assistant of the electronic device is Xiao A, and an application "Xiao A Memory" may be installed in the electronic device. In response to detecting a trigger operation for an application icon of "Xiao A Memory", the electronic device may execute the application "Xiao A Memory", and display an application interface of "Xiao A Memory". In response to detecting a trigger operation for a function "inputting memorization information through chat", a chat interface configured to chat with a virtual session object "Xiao A" may be displayed, so that the user may input to-be-stored information by chatting with the virtual session object "Xiao A".

It is notable that, in the embodiments of the disclosure, the specific manner of triggering the display of the above chat interface may not be limited.

At S120, a chat message input in the chat interface is acquired.

In some embodiments of the disclosure, after displaying the chat interface configured to chat with the virtual session object, the electronic device may acquire the chat message input by the user in the chat interface. Specifically, the chat message may be a text message input by the user, or a text message obtained by converting a voice message input by the user through an automatic speech recognition (ASR) technology.

In some implementations, the above-mentioned chat interface may include a message input area and a message display area, the message input area is used to input chat content, and the message display area is used to display the chat content with the virtual session object. The electronic device may acquire the chat content input by the user in the message input area according to the user's operation. In response to detecting a user's operation for sending the chat content, the chat content is displayed in the message display area, and the chat message corresponding to the chat content may be acquired. Specifically, when the chat content is a text message input by the user, the chat content may be directly taken as the chat message; and when the chat content is a voice message input by the user, the voice message may be converted into a text message, and the converted text message may be taken as the chat message.

At S130, memorization information corresponding to the chat message is stored in response to the chat message satisfying a memorization addition condition.

In the embodiments of the disclosure, after the chat message input by the user in the above-mentioned chat interface is acquired, the electronic device may match the acquired chat message with the memorization addition condition. When the chat message satisfies the memorization addition condition, it indicates that the memorization information corresponding to the chat message needs to be stored at present, so that the memorization information corresponding to the chat message may be stored. When the chat message does not satisfy the memorization addition condition, it indicates that the memorization information corresponding to the chat message does not need to be stored at present, and the memorization information corresponding to the chat message may not be stored at this time. Specifically, the memorization addition condition is a preset criterion that the chat message needs to satisfy for triggering the storage of the memorization information. The specific memorization addition condition may not be limited, for example, the memorization addition condition is a condition that the chat message may correspondingly include keywords.

In some implementations, the electronic device may acquire memorization information to be stored from the chat message. Specifically, the memorization information may include date, location, character, hobby, health, or number information, etc., which is not limited here. When the memorization information is date information, the memorization information may include information on a birthday, a wedding anniversary, a love anniversary, a school opening time, an exam schedule, etc. When the memorization information is location information, the memorization information may include information on a location of an object, a location for vehicle parking, etc. When the memorization information is character information, the memorization information may include information on an idol, or a favorite person. When the memorization information is hobby information, the memorization information may include information on a favorite restaurant, a favorite food, a favorite sport, etc. When the memorization information is health information, the memorization information may include information on a height, a weight, a blood pressure, a physiological period, etc. When the memorization information is number information, the memorization information may include information on a license plate number, an account number, an ID card number, a bank card number, etc. The memorization information is not limited herein.

In a possible implementation, with respect to the electronic device storing the memorization information corresponding to the chat message, the electronic device may convert the chat message into being a storage format of the memorization information, and store the converted information as the memorization information. For example, the electronic device may extract keywords from the chat message, and store the extracted keywords as the memorization information. In some alternative implementations, with respect to the electronic device storing the memorization information corresponding to the chat message, the electronic device may store the memorization information as well as the chat message after associating the chat message with the memorization information.

In the information storage method provided in the embodiments of the disclosure, the chat interface configured to chat with the virtual session object is displayed, the chat message input in the chat interface is acquired, and the memorization information corresponding to the chat message is stored in response to the chat message satisfying the memorization addition condition. Thus, the memorization information that the user needs to save is actively recorded during the chat of the user with the virtual session object. In this way, it is convenient for the user to store the memorization information that needs to be saved, and it can enhance the entertainment of the user in saving the memorization information, thereby enhancing the interactive experience of the user.

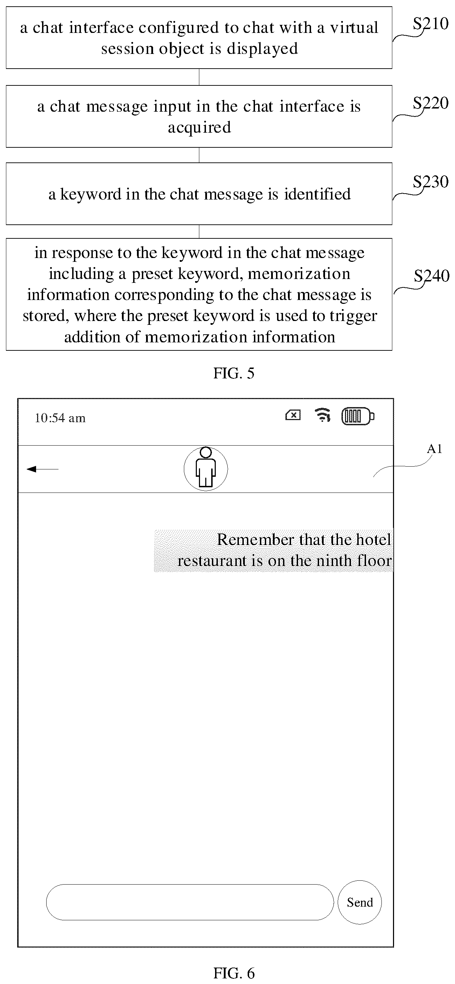

Referring to FIG. 5, FIG. 5 is a flowchart of the information storage method according to another embodiment of the disclosure. The information storage method is implemented by the above-mentioned electronic device. Details for the process illustrated in FIG. 5 will be described below, and the information storage method may specifically include operations as follows.

At S210, a chat interface configured to chat with a virtual session object is displayed.

At S220, a chat message input in the chat interface is acquired.

In the embodiments of the disclosure, for S210 and S220, reference may be made to the contents of the aforementioned embodiments, which will not be repeated herein.

At S230, a keyword in the chat message is identified.

In the embodiments of the disclosure, after the electronic device acquires the chat message input by the user in the chat interface, the electronic device may identify the keyword in the chat message, so as to determine, based on the identified keyword, whether it is necessary to store the memorization information corresponding to the chat message.

In a possible implementation, a pre-trained text keyword extraction model (such as a neural network model) may be stored in the electronic device. After acquiring the chat message input by the user in the chat interface, the electronic device may input the chat message into the text keyword extraction model to obtain the keyword in the chat message.

In another possible implementation, a preset rule (e.g., a keyword extraction template) may be stored in advance in the electronic device. After acquiring the chat message input by the user in the chat interface, the electronic device may use the preset rule to perform operation such as extracting, deleting, or filtering, on the chat message, thereby obtaining the keyword in the chat message.

For example, when the chat message acquired by the electronic device is "The opening time of the 2022 World Cup is November 21", the extracted keywords may include "World Cup", "opening time", and "November 21". Certainly, the above extracted keywords are only examples and do not constitute a limitation on actual keyword extraction manners.

At S240, in response to the keyword in the chat message including a preset keyword, the memorization information corresponding to the chat message is stored, where the preset keyword is used to trigger addition of memorization information.

In the embodiments of the disclosure, after obtaining the keyword in the chat message, the electronic device may match the obtained keyword with the preset keyword. When any one of the obtained keywords matches the preset keyword, that is, the keyword in the chat message includes the preset keyword, it indicates that the memorization information corresponding to the chat message needs to be stored at present, so that the electronic device may store the memorization information corresponding to the chat message. In some alternative implementations, when each of the obtained keyword fails to match the preset keyword, it indicates that the memorization information corresponding to the chat message does not need to be stored at present, and the memorization information corresponding to the chat message may not be stored at this time.

In some embodiments, the preset keyword is set in advance for triggering the addition of memorization information. In the embodiments of the disclosure, the specific preset keyword may not be limited. For example, the preset keywords may include "remember", "mark for me", "record", "memorize", "note", "store", "save", and "storage", which may directly indicate that the user intends to store the memorization information.

In a possible implementation, the preset keyword may be set by default to trigger the addition of memorization information. For example, the electronic device presets by default the keyword used to trigger the storage of memorization information for the chat interface. The electronic device may display an introduction content (such as an introduction animation, or an introduction video) concerning triggering of the storage of memorization information in the chat interface, so as to make the user aware of the above keyword. In this way, when there is memorization information required to be stored, the user may input the chat message including the preset keyword in the above chat interface, so as to trigger the storage of memorization information.

In another possible implementation, the preset keyword used to trigger the addition of memorization information may be set according to a user's operation in a setting interface. For example, the electronic device may display the setting interface for setting the above preset keyword, and the electronic device may acquire, according to the user's operation in the setting interface, the preset keyword set by the user. In this way, the user may set the above preset keyword according to his/her own habits, thereby facilitating the user to realize the storage function of the memorization information.

Exemplarily, the preset keyword may include "remember". As illustrated in FIG. 6, when the electronic device displays the chat interface A1, and the user inputs and sends the chat message A4 of "Remember that the hotel restaurant is on the ninth floor" in the chat interface A1, the electronic device may determine that the inputted chat message A4 includes the preset keyword "remember", and thus may trigger to store the memorization information corresponding to the chat message A4.

In the information storage method provided by the embodiments of the disclosure, the chat message input in the chat interface configured to chat with the virtual session object is acquired; the keyword in the chat message is identified; and the memorization information corresponding to the chat message is stored when the identified keyword includes the preset keyword. This allows the user to trigger the storage of the memorization information through the preset keyword while chatting with the virtual session object, which makes it convenient for the user to store the memorization information that needs to be saved, and can enhance the entertainment of the user in human-computer interaction, thereby enhancing the user's interactive experience.

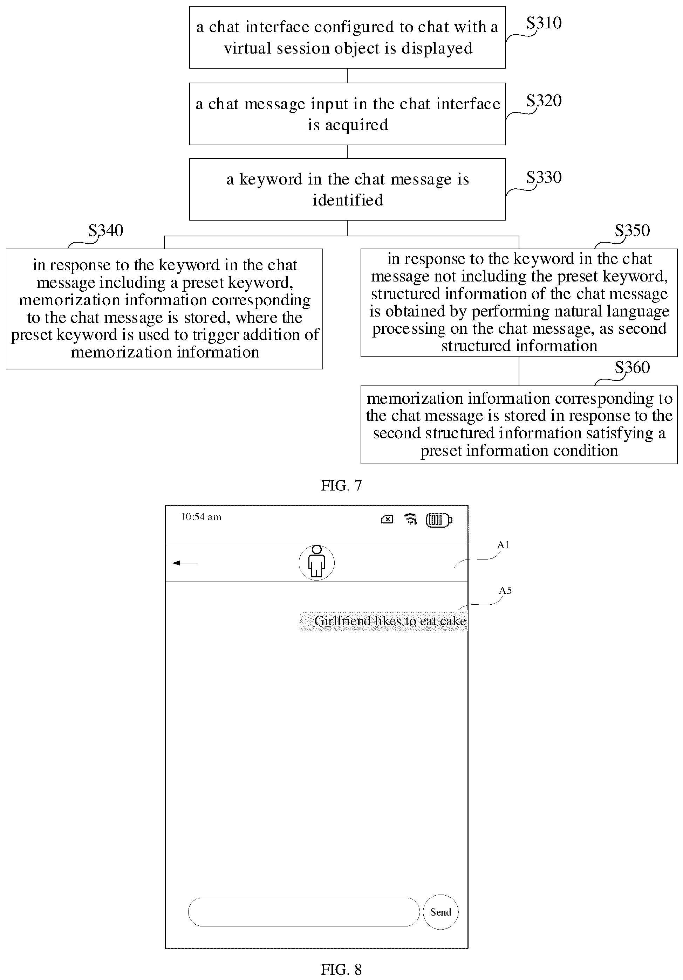

Referring to FIG. 7, FIG. 7 is a flowchart of the information storage method according to yet another embodiment of the disclosure. The information storage method is implemented by the above-mentioned electronic device. Details for the process illustrated in FIG. 7 will be described below, and the information storage method may specifically include operations as follows.

At S310, a chat interface configured to chat with a virtual session object is displayed.

At S320, a chat message input in the chat interface is acquired.

At S330, a keyword in the chat message is identified.

In the embodiments of the disclosure, for S310, S320 and S330, reference may be made to the contents of the aforementioned embodiments, which will not be repeated herein.

At S340, in response to the keyword in the chat message including a preset keyword, the memorization information corresponding to the chat message is stored, where the preset keyword is used to trigger addition of memorization information.

In some embodiments, when the electronic device determines that the keyword in the chat message includes the preset keyword, it indicates that the memorization information corresponding to the chat message needs to be stored at present. Therefore, the electronic device may store the memorization information corresponding to the chat message. In addition, when storing the memorization information corresponding to the chat message, the electronic device may acquire, as first target information, information in the chat message other than the preset keyword; perform natural language processing on the first target information to obtain, as first structured information, structured information of the first target information; and store the first target information and the first structured information.

It may be understood that, since the preset keyword is used to trigger the addition of memorization information, the preset keyword is not information that the user needs to remember. Therefore, the preset keyword may be deleted from the chat message, and information after deleting the preset keyword may be taken as the first target information. Based on the first target information, natural language processing (NLP) is then performed on the chat message to obtain the structured information. Such structured information may be stored as the memorization information, and the first target information may be stored as original information corresponding to the structured information; that is, the first target information and the first structured information are stored in an associated manner.

In a possible implementation, in the case where the first target information and the first structured information are stored in the associated manner, in response to an input first information query operation, the electronic device may query, from the stored memorization information, first target information matching the first information query operation, and may generate first query answer information based on first structured information of the queried first target information; and then the electronic device outputs the queried first target information and the first query answer information.

In some implementations, the structured information may be in a form of a triple or a key-value pair. Certainly, the specific form of the structured information may not be limited. By storing the structured information extracted from the first target information, it is possible to accurately find, based on the stored structured information, a corresponding answer content in a subsequent search for the memorization information.

In a possible implementation, when the structured information is in the form of the triple, the structured information may include an entity, an entity attribute, and an entity attribute value, where the entity may represent a subject, an entity attribute may represent a relationship between the entity and the entity attribute value, and the entity attribute value is a specific value of the entity attribute. It may be understood that the above acquisition of structured information may be regarded as relational triple extraction (RTE), that is, two entities and a relationship between the two entities are extracted from a text simultaneously. The triple may be represented as (Subject, Relation, Object) or (Subject, Prodicate, Object), where Subject and Object are two entities, which may also be called a head entity and a tail entity respectively, and Relation and Prodicate represent a relationship category. The head entity refers to the above entity, the tail entity refers to the above entity attribute value, and the relationship category refers to the above entity attribute. For example, for text content of "I parked the car downstairs", the extracted entity is "car", the extracted entity attribute is "location", and the extracted entity attribute value is "downstairs". For another example, for text content of "Dad likes to eat fish", the extracted entity is "Dad", the extracted entity attribute is "favorite food", and the extracted entity attribute value is "fish".

In some alternative implementations, with respect to extracting the structured information for the first target information, missing information may be supplemented when the first target information lacks an entity or an entity attribute. For example, for text content of "exam on November 12", the entity "exam" and the entity attribute value "November 12" may be directly extracted. An entity attribute is missing, and the electronic device recognizes a semantic relationship between "exam" and "November 12" to conclude that the relationship between "exam" and "November 12" is time, and takes "time" as the entity attribute.

In a possible implementation, when the structured information is in the form of the key-value pair, the structured information may include an entity attribute and an entity attribute value. For example, for text content of "cannot drink alcohol", the extracted entity attribute is "things that cannot be done", and the extracted entity attribute value is "drinking alcohol". For another example, for text content of "the nucleic acid testing is required", the extracted entity attribute is "things that need to be done", and the extracted entity attribute value is "nucleic acid testing".

In some embodiments, with respect to obtaining information other than the preset keyword in the chat message, it is considered that, when the user inputs the chat message for triggering the storage of the memorization information, some irrelevant words may be mixed with the input preset keyword, and these irrelevant words are usually located in front of the preset keyword. Thus, the electronic device may obtain the preset keyword and the words located in front of the preset keyword, and then remove the preset keyword and the words located in front of the preset keyword to obtain the above-mentioned first target information. For example, the preset keyword is "remember", and the chat message entered by the user is "help me remember to take the nucleic acid testing tomorrow". After removing "remember" from the chat message, the obtained text message is "Help me to take the nucleic acid test tomorrow". Apparently, the obtained text message includes information that does not need to be stored, i.e., "Help me". Thus, the electronic device may obtain words that are located before the preset keyword, i.e., "help me", and the preset keyword 'remember', and remove the words "help me" and the preset keyword "remember" from the chat message, thereby obtaining the above-mentioned first target information. In this way, the accuracy of the obtained structured information can be improved.

At S350, in response to the keyword in the chat message not including the preset keyword, structured information of the chat message is obtained by performing natural language processing on the chat message, as second structured information.

In the embodiments of the disclosure, when the keyword identified by the electronic device does not include the preset keyword, the electronic device may further perform the natural language processing on the chat message to obtain the structured information of the chat message, and take the structured information of the chat message as the second structured information. The second structured information may also be in the form of the triple or the key-value pair. Certainly, the specific form of the structured information may not be limited. For the specific manner for obtaining the structured information corresponding to the chat message, reference may be made to the manner for obtaining the structured information of the first target information, which will not be described in detail here.

At S360, the memorization information corresponding to the chat message is stored in response to the second structured information satisfying a preset information condition.

In the embodiments of the disclosure, after the electronic device obtains the second structured information (i.e., the structured information of the above chat message), the electronic device may match the second structured information with the preset information condition. Specifically, the preset information condition may be a preset condition that the structured information needs to meet for triggering the storage of memorization information. According to a matching result, when the second structured information meets the preset information condition, it may indicate that the memorization information corresponding to the chat message needs to be stored at present, so that the memorization information corresponding to the chat message may be stored. When the second structured information does not meet the preset information condition, it indicates that the memorization information corresponding to the chat message does not need to be stored at present, so that the storage of the memorization information corresponding to the chat message may be omitted.

It may be understood that, in the embodiments of the disclosure, the keyword in the chat message is first identified, and the memorization information corresponding to the chat message is stored when the identified keyword includes the preset keyword. The structured information of the chat message is determined when the identified keyword does not include the preset keyword. The memorization information corresponding to the chat message is stored, when the structured information of the chat message meets the preset information condition. An amount of computation for identifying the keyword in the chat message and determining whether the keyword includes the preset keyword is usually significantly less than an amount of computation for obtaining structured information. Thus, by determining whether to trigger the storage of memorization information through the information storage method provided in the embodiments of the disclosure, it can reduce a processing capacity of the electronic device, thereby reducing the power consumption of the electronic device.

In a possible implementation, the preset information condition may include that the second structured information includes a preset entity. The preset entity may be an entity set in advance. The storage of the memorization information may be automatically triggered, when it is recognized that the structured information of the chat message includes the preset entity. For example, the preset entity may be "wife", "mother", "father", and "car".

In another possible implementation, the preset information condition may include that the second structured information includes a preset entity attribute. The preset entity attribute may be an entity attribute set in advance. The storage of memorization information may be automatically triggered, when it is recognized that the structured information of the chat message includes the preset entity attribute. For example, the preset entity attribute may be "birthday", "gift money", and "favorite food".

In the above implementations, the structured information of the chat message is determined, and the memorization information is stored when the structured information meets the above-mentioned preset information condition. In this way, the user can trigger the storage of the memorization information without entering the preset keyword for triggering the storage of the memorization information, thereby making it convenient for the user to store the memorization information that needs to be saved. For example, referring to FIG. 8, the preset entity attribute may be "favorite food", and the user inputs and sends the chat message A5 "girlfriend likes to eat cake" in the chat interface A1. After determining the structured information of the chat message A5, the electronic device may determine that the structured information includes the preset entity attribute "favorite food", and thus may trigger the storage of the memorization information corresponding to the chat message A5.

In some alternative implementations, the above-mentioned preset entity and preset entity attribute may be set in advance by default for triggering the addition of memorization information. The electronic device may display an introduction content (such as an introduction animation, and an introduction video) concerning triggering the storage of the memorization information in the chat interface, so as to make the user aware of the above preset entity and the preset entity attribute. In this way, when the memorization information is required to be stored, the user may input the chat message including the preset entity and the preset entity attribute in the above chat interface, so as to trigger the storage of the memorization information.

In some alternative implementations, the above-mentioned preset entity and the preset entity attribute may be set according to the user's operation in the setting interface for triggering the addition of memorization information. For example, the electronic device may display the setting interface for setting the above preset entity and the preset entity attribute, and the electronic device may acquire, according to the user's operation in the setting interface, the preset entity and the preset entity attribute set by the user. In this way, the user may set the above preset entity and the preset entity attribute according to his/her own habits, thereby facilitating the user to realize a function of storing the memorization information. For example, when the user needs to store all memorization information about "birthday", "birthday" may be set as the preset entity attribute. Thus, in response to the user entering a chat message including "birthday", the determined structured information of the chat message may include the preset entity attribute, thereby triggering the storage of the memorization information.

In some implementations, with respect to storing the memorization information of the chat message in response to the second structured information satisfying the preset information condition, the chat message and the second structured information may be stored after being associated, and the chat message may be regarded as original information of the second structured information. In the embodiments of the disclosures, by storing the original information (i.e., the chat message or the first target information) together with the structured information, in response to a user's query for the memorization information, a query result and the stored original information may be output simultaneously for the user's reference.

In a possible implementation, after storing the above chat message and the second structured information, the electronic device may further query, in response to an input second information query operation, a chat message matching the second information query operation from the stored memorization information. The electronic device may generate second query answer information, according to second structured information corresponding to the queried chat message. The electronic device then outputs the queried chat message and the chat message query answer information. For example, a query content of the second information query operation is "When is the World Cup", the obtained matching chat message includes "The 2022 World Cup starts on November 21", "The 2018 World Cup starts on June 14" and "The 2018 World Cup starts on June 12", and the generated first query answer information is "I remember it is November 21". The second query answer information "I remember it is November 21" and the above matching chat messages may be output together when outputting the query result. In this way, not only can the user be informed of the query answer information of the query, but also the user can check the query answer information according to the chat messages obtained by the query.

In some alternative implementations, when the above second query answer information and the matching chat message are outputted simultaneously, a target keyword may be highlighted in such chat message. Specifically, the target keyword may be a keyword corresponding to the second information query operation. For example, when the query content of the second information query operation is "When is the World Cup", the target keyword may be "World Cup". A highlighting manner includes at least one or more of: background highlighting, changing font style, changing font color, adding font border, adding underline, adding preset identifier, dynamic font display, and font transparent effect. Certainly, other manners capable of highlighting also fall within the protection scope of the embodiments of this application, and the details will not be repeated here.

In some embodiments, the electronic device may also trigger the storage of the memorization information only by identifying the preset keyword. That is, after obtaining the chat message, the electronic device directly identifies the keyword in the chat message, and when it is determined that the keyword in the chat message include the preset keyword, the electronic device stores the memorization information corresponding to the chat message. Alternatively, the electronic device may trigger the storage of the memorization information only by determining whether the structured information of the chat message meets the preset information condition. That is, after obtaining the chat message, the electronic device directly obtains the structured information of the chat message, and the electronic device stores the memorization information corresponding to the chat message, when the structured information of the chat message meets the preset information condition.

In some embodiments, after obtaining the chat message, the electronic device may further obtain the keyword in the chat message and the structured information of the chat message simultaneously. When the keyword in the chat message includes the preset keyword, and/or the structured information of the chat message meets the preset information condition, the memorization information corresponding to the chat message is stored.

In some embodiments, after obtaining the chat message, the electronic device may first obtain the structured information of the chat message, and store the memorization information corresponding to the chat message when the structured information of the chat message meets the preset information condition. When the structured information of the chat message does not meet the preset information condition, the electronic device may further obtain the keyword in the chat message, and store the memorization information corresponding to the chat message when the keyword in the chat message includes the preset keyword.

In the information storage method provided by the embodiments of the disclosure, the chat message input in the chat interface configured to chat with the virtual session object is acquired, and the keyword in the chat message is identified. The memorization information corresponding to the chat message is stored when the identified keyword includes the preset keyword. When the identified keyword does not include the preset keyword, the structured information of the chat message is determined, and the memorization information corresponding to the chat message is stored, in response to the structured information corresponding to the chat message meeting the preset information condition. As such, the user can not only use the preset keyword to trigger the storage of the memorization information, but also trigger the storage of the memorization information by inputting the chat message whose structured information meets the preset information condition. In this way, trigger manners of automatically triggering the storage of the memorization information is enriched, which facilitates the storage of information that the user needs to remember, and enhances the user's entertainment in human-computer interaction, thereby improving the user's interactive experience.

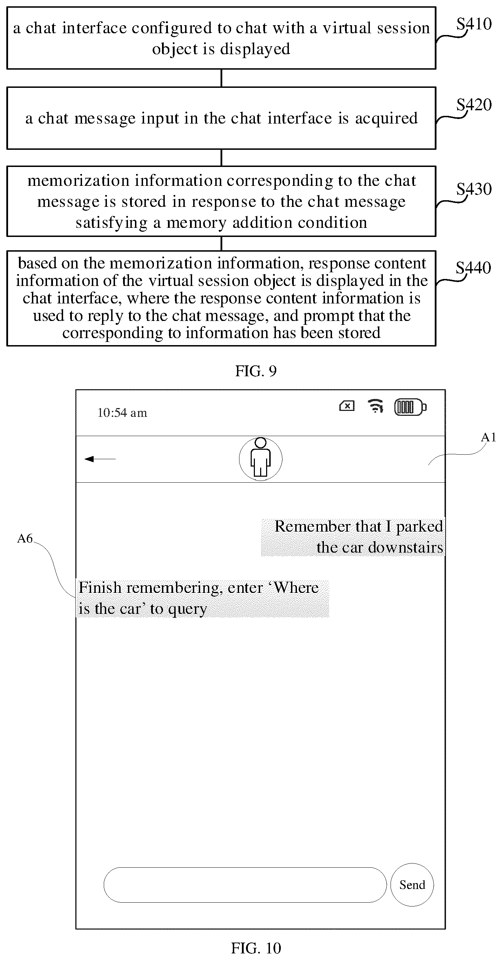

Referring to FIG. 9, FIG. 9 is a flowchart of an information storage method according to still another embodiment of the disclosure. The information storage method is implemented by the above-mentioned electronic device. Details for the process illustrated in FIG. 9 will be described below, and the information storage method may specifically include operations as follows.

At S410, a chat interface configured to chat with a virtual session object is displayed.

At S420, a chat message input in the chat interface is acquired.

At S430, memorization information corresponding to the chat message is stored in response to the chat message satisfying a memorization addition condition.

In the embodiments of the disclosure, for S410, S420 and S430, reference may be made to the contents of the aforementioned embodiments, which will not be repeated herein.

At S440, based on the memorization information, response content information of the virtual session object is displayed in the chat interface, where the response content information is used to reply to the chat message, and prompt that the memorization information has been stored.

In the embodiments of the disclosure, after storing the memorization information corresponding to the above chat message, the electronic device may further display the response content information of the virtual session object in the chat interface based on the stored memorization information, so as to answer the above chat message input by the user in the chat interface and prompt that the above memorization information has been stored. In this way, it enables to give feedback, in a form of chat, on the result of storing the memorization information, which can improve the user's interactive experience.

In some embodiments, the response content information includes question information for querying the memorization information. When the electronic device displays the response content information of the virtual session object in the chat interface, the electronic device may generate, based on the above stored memorization information, the question information for querying the memorization information. The electronic device then generates, based on the generated question information, the response content information of the virtual session object, and displays the response content information in the chat interface. As such, the electronic device replies to the above chat message input by the user in the chat interface, and prompts that the above memorization information has been stored and that the above question information is used to query the above stored memorization information.

Exemplarily, referring to FIG. 10, when the user inputs the chat message "Remember that I parked the car downstairs" in the chat interface A1, the stored memorization information may be "car; location; downstairs". The electronic device may generate the question information "Where is the car" based on the stored memorization information. The electronic device then generates, based on the question information, the response content information A6 "Finish remembering, enter 'Where is the car' to query" for display. The electronic device displays the response content information A6 "Finish remembering, enter 'Where is the car' to query" in the chat interface. As such, the user may not only be informed that the electronic device has stored the above memorization information, but also be informed of the way of querying the memorization information afterwards.

The information storage method provided in the embodiments of the disclosure can realize the active recording of the memorization information that the user needs to save during a chat of the user with the virtual session object. As such, it facilitates the user to store the memorization information required to be saved, and can enhance the entertainment of the user of saving the memorization information, thereby improving the user's interactive experience. In addition, based on the stored memorization information, the corresponding response content information is displayed in the chat interface. As such, feedback on the result of storing the memorization information is given in the form of chat, which further improves the user's interactive experience.

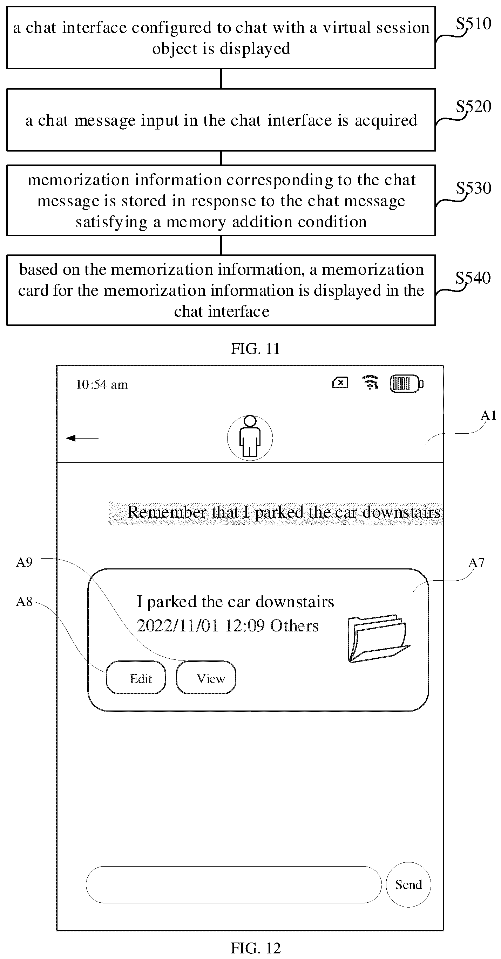

Referring to FIG. 11, FIG. 11 is a flowchart of the information storage method according to still yet another embodiment of the disclosure. The information storage method is implemented by the above-mentioned electronic device. Details for the process illustrated in FIG. 11 will be described below, and the information storage method may specifically include operations as follows.

At S510, a chat interface configured to chat with a virtual session object is displayed.

At S520, a chat message input in the chat interface is acquired.

At S530, memorization information corresponding to the chat message is stored in response to the chat message satisfying a memorization addition condition.

In the embodiments of the disclosure, for S510, S520 and S530, reference may be made to the contents of the aforementioned embodiments, which will not be repeated herein.

At S540, based on the memorization information, a memorization card for the memorization information is displayed in the chat interface.

In the embodiments of the disclosure, after storing the memorization information corresponding to the above chat message, the electronic device may further display, based on the stored memorization information, the memorization card for the memorization information in the chat interface, so as to display the stored memorization information in the chat interface. Specifically, the memorization card may include basic information of the memorization information, and the basic information may include original information (such as the chat message, and the information obtained by removing the preset keyword in the chat message in the above embodiments) of the memorization information, a storage time of the memorization information, a location at the time of storing the memorization information, etc.

In some embodiments, the memorization card may include an editing control used to edit the stored memorization information. The electronic device may detect an operation in the chat interface, and display an editing interface for the memorization information in response to detecting a first operation performed on the editing control. In response to detecting an editing operation for the memorization information in the editing interface, the electronic device may acquire edited memorization information, and store the edited memorization information. Specifically, the first operation may be a click operation, a press operation, etc., and the specific operation type may not be limited.

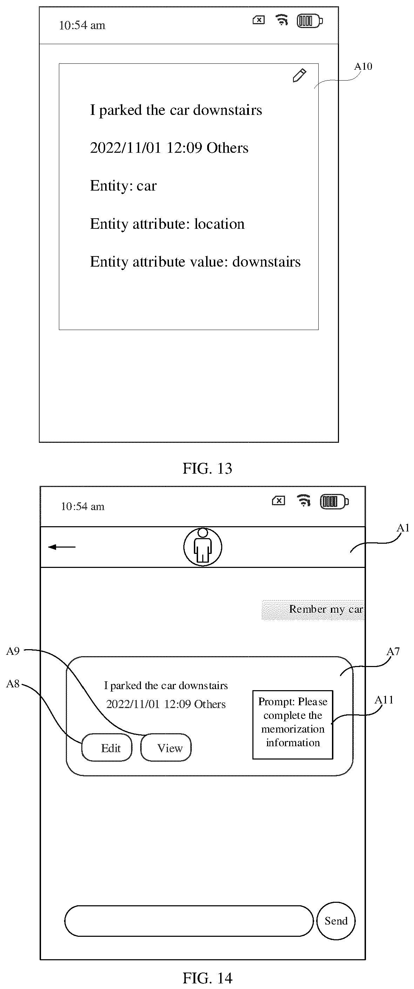

Exemplarily, referring to FIG. 12, the electronic device displays the memorization card A7 including the editing control A8 and a viewing control A9 in the chat interface A1. The editing control A8 is used to edit the memorization information stored this time, and the viewing control A9 is used to view all stored memorization information. Referring to FIG. 13, in response to detecting the first operation performed on the editing control A8, the editing interface A10 may be displayed in the chat interface, and the memorization information may be edited and updated according to the editing operation on the editing interface A10.

In a possible implementation, considering that the chat message input by the user when the user needs to store the memorization information may not be complete, and thus the above stored memorization information may also be incomplete. Therefore, after displaying the above memorization card, and before displaying, in response to the first operation on the editing control, the editing interface for the memorization information, the electronic device may further determine whether the memorization information meets a preset missing condition. When the memorization information meets the preset missing condition, a first prompt message is displayed on the memorization card, and the first prompt message is used to prompt edition for the memorization information. Specifically, the preset missing condition may be that any element of the structured information of the triple is missing, e.g., at least one of the entity, the entity attribute, or the entity attribute value is missing. Therefore, when the memorization card is displayed, by actively prompting that the memorization information meets the preset missing condition, the user is facilitated to edit the memorization information, so that the saved memorization information can be accurate. Exemplarily, referring to FIG. 14, after the user enters the chat message "Remember my car" in the chat interface A1, the structured information stored at this time only has the entity "car", and the entity attribute and the entity attribute value in the structured information are missing. In this case, the prompt message A11 "Please complete the memorization information" may be displayed in the memorization card A7. As such, the integrity of the memorization information can be ensured after the user edits the memorization information.

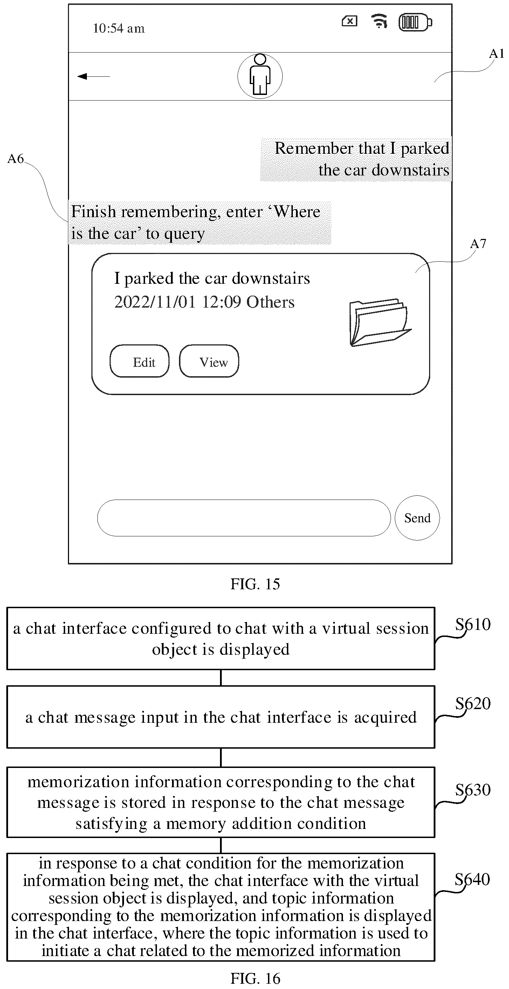

In some embodiments, after storing the memorization information corresponding to the above chat message, the electronic device may further simultaneously display the response content information in the aforementioned embodiments and the memorization card in such embodiments in the chat interface. For example, as illustrated in FIG. 15, the chat interface A1 may display the response content information A6 and the memory card A7 simultaneously.

The information storage method provided in the embodiments of the disclosure can realize the active recording of the memorization information that the user needs to save during a chat of the user with the virtual session object. As such, it facilitates the user to store the memorization information required to be saved, and the entertainment of the user of saving the memorization information can be enhanced, thereby improving the user's interactive experience. In addition, it may further enable the card for the memorization information to be displayed in the chat interface, so that the user may view and edit the stored memorization information, which further improves the user's interactive experience.

Referring to FIG. 16, FIG. 16 is a flowchart of an information storage method according to still yet another embodiment of the disclosure. The information storage method is implemented by the above-mentioned electronic device. Details for the process illustrated in FIG. 16 will be described below, and the information storage method may specifically include operations as follows.

At S610, a chat interface configured to chat with a virtual session object is displayed.

At S620, a chat message input in the chat interface is acquired.

At S630, memorization information corresponding to the chat message is stored in response to the chat message satisfying a memorization addition condition.

In the embodiments of the disclosure, for S610, S620 and S630, reference may be made to the contents of the aforementioned embodiments, which will not be repeated herein.

At S640, in response to a chat condition for the memorization information being met, the chat interface configured to chat with the virtual session object is displayed, and topic information corresponding to the memorization information is displayed in the chat interface, where the topic information is used to initiate a chat related to the memorization information.

In some embodiments of the disclosure, after storing the memorization information of the chat message, the electronic device may further actively initiate a chat related to the stored memorization information. Specifically, when the chat condition for the memorization information is met, the chat interface configured to chat with the virtual session object may be displayed, and the topic information corresponding to the memorization information may be displayed in the chat interface, so as to initiate the chat related to the memorization information. As such, it enables to actively chat with the user about the topic related to the memorization information, so as to provide reminders related to the memorization information, thereby prevent the user from omitting the relevant information.

In some implementations, the above memorization information has structured information, and an entity attribute in the structured information includes at least one of date and location information. When a current date is the date indicated by the entity attribute value in the structured information, the electronic device may display the chat interface configured to chat with the virtual session object, and display the topic information corresponding to the memorization information in the chat interface, so as to achieve an effect of reminding the user of the memorization information. Alternatively, when a located position of the electronic device is the position indicated by the entity attribute value in the structured information, the electronic device may display the chat interface configured to chat with the virtual session object, and display the topic information corresponding to the memorization information in the chat interface, so as to achieve the effect of reminding the user of the memorization information. For example, when the above structured information is "the entity is loan repayment; the entity attribute is date; and the entity attribute value is November 25", the electronic device may display the chat interface configured to chat with the virtual session object on November 25, and display the topic information "Did you pay back the loan today" in the chat interface, so as to guide the user to chat with the virtual session object and achieve an effect of reminding the user to repay the loan.

In some embodiments, the above memorization information includes the structured information, and the entity attribute in the structured information include target content related to the Internet. When the electronic device queries the latest news corresponding to the target content through the Internet, the electronic device may display the chat interface configured to chat with the virtual session object, and display the topic information corresponding to the memorization information in the chat interface, so as to achieve the effect of reminding the user of a relevant news of the target content. For example, the above structured information is "the entity is me; the entity attribute is idol; and the entity attribute value is singer A". When the electronic device queries the news of singer A through the Internet, the electronic device displays the chat interface configured to chat with the virtual session object, and display the topic information "there is news about singer A today" in the chat interface, so as to guide the user to chat with the virtual session object and be informed of the news of singer A.

Certainly, the specific chat condition and the specific topic information displayed in the embodiments of the disclosure may not be limited.

The information storage method provided in the embodiments of the disclosure can realize the active recording of the memorization information that the user needs to save during a chat of the user with the virtual session object. As such, it facilitates the user to store the memorization information required to be saved, and can enhance the entertainment of the user of saving the memorization information, thereby improving the user's interactive experience. In addition, for the stored memorization information, the chat is actively initiated when the corresponding chat condition is met, thereby achieving an effect of providing relevant reminders for the memorization information.

Referring to FIG. 17, FIG. 17 is a block diagram of an information storage apparatus 700 according to some embodiments of the disclosure. The information storage apparatus 700 is applied to the above electronic device. The information storage apparatus 700 includes: a chat interface displaying module 710, a chat message acquiring module 720, and a memorization information storing module 730. Specifically, the chat interface displaying module 710 is configured to display a chat interface configured to chat with a virtual session object; the chat message acquiring module 720 is configured to acquire a chat message input in the chat interface; and the memorization information storing module 730 is configured to store, in response to the chat message satisfying a memorization addition condition, memorization information corresponding to the chat message.

In some implementations, the memorization information storing module 730 may be specifically configured to: identity a keyword in the chat message; in response to the keyword in the chat message including a preset keyword, store the memorization information corresponding to the chat message, where the preset keyword is used to trigger addition of memorization information.

In some possible implementations, the memorization information storing module 730 may be further configured to: in response to the keyword in the chat message including the preset keyword, obtain, as first target information, information other than the preset keyword in the chat message; obtain, by performing natural language processing on the first target information, structured information of the first target information as first structured information; and store the first target information and the first structured information.

In some possible implementations, the memorization information storing module 730 may be further configured to: in response to the keyword in the chat message not including the preset keyword, obtain, by performing natural language processing on the chat message, structured information of the chat message as second structured information; and in response to the second structured information satisfying a preset information condition, store the memorization information corresponding to the chat message.

In some alternative implementations, the preset information condition includes:
the second structured information includes a preset entity; and/or
the second structured information includes a preset entity attribute.

In some alternative implementations, the memorization information storing module 730 may be further configured to: in response to the second structured information satisfying the preset information condition, store the chat message and the second structured information.

In some implementations, the information storage apparatus 700 may further include: an answer information displaying module. After storing the memorization information corresponding to the chat message in response to the chat message satisfying the memorization addition condition, the answer information displaying module is configured to: display, based on the memorization information, response content information of the virtual session object in the chat interface, where the response content information is used to reply to the chat message, and prompt that the memorization information has been stored.

In some possible implementations, the answer information displaying module may be specifically configured to: generate the question information based on the memorization information; and generate, based on the question information, the response content information, and display the response content information in the chat interface, where the response content information is used to reply to the chat message, and the response content information is further used to prompt that the memorization information has been stored and prompt that the memorization information is capable of being queried by using the question information.

In some implementations, the information storage apparatus 700 may further include: a card displaying module. After storing the memorization information corresponding to the chat message in response to the chat message satisfying the memorization addition condition, the card displaying module is configured to: display, based on the memorization information, a memorization card for the memorization information in the chat interface.

In some possible implementations, the memorization card includes an editing control. The information storage apparatus 700 may further include: an editing interface displaying module and an edited information acquiring module. After displaying, based on the memorization information, the memorization card for the memorization information in the chat interface, the editing interface displaying module is configured to: in response to a first operation on the editing control, display an editing interface for the memorization information; and the edited information acquiring module is configured to: in response to an editing operation for the memorization information in the editing interface, acquire and store edited memorization information.

In some alternative implementations, the information storage apparatus 700 may further include: a message prompting module. Before displaying the editing interface for the memorization information in response to the first operation on the editing control, the information prompting module is configured to: in response to the memorization information satisfying a preset missing condition, display a first prompt message in the memorization card, where the first prompt message is used to prompt edition for the memorization information.

In some implementations, after storing the memorization information corresponding to the chat message in response to the chat message satisfying the memorization addition condition, the chat interface displaying module 710 may be further configured to: in response to a chat condition for the memorization information being met, display the chat interface with the virtual session object, and display topic information corresponding to the memorization information in the chat interface, where the topic information is used to initiate a chat related to the memorization information.

Those skilled in the art can clearly appreciate that, for the convenience and simplicity of the description, the specific operation processes of the above apparatus and modules can be referred to the corresponding processes in the above method embodiments and will not be repeated herein.

In the embodiments provided in the disclosure, a coupling between the modules may be electrical, mechanical, or in other forms.

Furthermore, various functional modules in the various embodiments of the disclosure may be integrated in one processing module, or each module may physically exist separately, or two or more modules may be integrated in a single module. The above integrated modules may be implemented either in the form of hardware or in the form of software functional modules

Based on the above, in the solutions provided in the embodiments of the disclosure, the chat interface configured to chat with the virtual session object is displayed, the chat message input in the chat interface is acquired, and the memorization information corresponding to the chat message is stored in response to the chat message satisfying the memorization addition condition. Thus, the memorization information that the user needs to save is actively recorded during a chat of the user with the virtual session object. In this way, it is convenient for the user to store the memorization information that needs to be saved, and it can enhance the entertainment of the user in saving the memorization information, thereby enhancing the interactive experience of the user.

Referring to FIG. 18, FIG. 18 is a block diagram of an electronic device according to some embodiments of the disclosure. The electronic device 100 may be an electronic device capable of running programs, such as a smart phone, a tablet computer, a smart watch, and an e-book. The electronic device 100 in the embodiments of the disclosure may include one or more of a processor 110, a memory 120, and one or more programs. The one or more programs may be stored in the memory 120 and are configured to be executed by the one or more processors 110, and the one or more programs are configured to execute the method described in the aforementioned method embodiments.

The processor 110 may include one or more processing cores. The processor 110 may be connected to various parts of the entire electronic device 100 by using various interfaces and lines, and execute various functions of the electronic device 100 and process data by running or executing instructions, programs, code sets, or instruction sets stored in the memory 120, and calling data stored in the memory 120. In some alternative implementations, the processor 110 may be implemented in at least one hardware of a digital signal processing (DSP), a field-programmable gate array (FPGA), and a programmable logic array (PLA). The processor 110 may integrate one or more of a central processing unit (CPU), a graphics processing unit (GPU), and a modem. The CPU mainly handles an operating system, a user interface, an application, or the like. The GPU is configured to render and draw the content required to be displayed by the display screen. The modem is configured to handle a wireless communication. It can be understood that the modem may also not be integrated into the processor 110 and be realized by a single chip.

The memory 120 may include a random-access memory (RAM), and may also include a read-only memory (ROM). The memory 120 may be configured to store instructions, programs, codes, code sets, or instruction sets. The memory 120 may include a program storage area and a data storage area. The program storage area may store instructions for implementing the operating system, instructions for realizing at least one function (such as a touch control function, a voice playing function, and an image playing function), instructions for implementing the various method embodiments, etc. The data storage area may store data (e.g., phone book, audio/video data, chat log data) and the like created by the electronic device 100 in use.

Referring to FIG. 19, FIG. 19 is a diagram of a computer-readable storage medium according to some embodiments of the disclosure. The computer-readable medium 800 has program codes stored thereon, and the program codes may be called by a processor to execute the method described in the above method embodiments.

The computer-readable storage medium 800 may be an electronic memory such as a flash memory, electrically erasable programmable read-only memory (EEPROM), EPROM, hard disk, or ROM. In some alternative implementations, the computer-readable storage medium 800 includes a non-transitory computer-readable storage medium. The computer-readable storage medium 800 has a storage space for program codes 810 that perform any operation in the above methods. The program codes may be read from or written into one or more computer program products. The program codes 810 may be compressed, for example, in an appropriate form.

Finally, it is notable that, the above embodiments are merely intended to illustrate but not to limit the technical solutions of the disclosure. Although the disclosure has been described in detail with reference to the foregoing embodiments, it can be understood that, those of ordinary skill in the art can modify the technical solutions described in the foregoing embodiments or make equivalent substitutions for some technical features therein. These modifications or substitutions do not drive the essence of the corresponding technical solutions away from the spirit and scope of the technical solutions of the embodiments of the disclosure.

## Claims

1. An information storage method, comprising:
displaying a chat interface configured to chat with a virtual session object;
acquiring a chat message input in the chat interface; and
in response to the chat message satisfying a memorization addition condition, storing memorization information corresponding to the chat message.

2. The information storage method as claimed in claim 1, wherein storing the memorization information corresponding to the chat message in response to the chat message satisfying the memorization addition condition, comprises:
identifying a keyword in the chat message; and
in response to the keyword in the chat message comprising a preset keyword, storing the memorization information corresponding to the chat message, wherein the preset keyword is used to trigger addition of memorization information.

3. The information storage method as claimed in claim 2, wherein storing the memorization information corresponding to the chat message in response to the keyword in the chat message comprising the preset keyword, comprises:
in response to the keyword in the chat message comprising the preset keyword, obtaining, as first target information, information other than the preset keyword in the chat message;
obtaining, by performing natural language processing on the first target information, structured information of the first target information as first structured information; and
storing the first target information and the first structured information.

4. The information storage method as claimed in claim 3, wherein storing the first target information and the first structured information, comprises:
storing the first target information and the first structured information in an associated manner.

5. The information storage method as claimed in claim 4, wherein after storing the first target information and the first structured information in the associated manner, the method further comprises:
in response to a first information query operation, querying, from stored memorization information, first target information matching the first information query operation;
generating first query answer information according to first structured information associated with the queried first target information; and
outputting the first query answer information and the queried first target information.

6. The information storage method as claimed in any one of claims 2 to 5, wherein storing the memorization information corresponding to the chat message in response to the chat message satisfying the memorization addition condition, further comprises:
in response to the keyword in the chat message not comprising the preset keyword, obtaining, by performing natural language processing on the chat message, structured information of the chat message as second structured information; and
in response to the second structured information satisfying a preset information condition, storing the memorization information corresponding to the chat message.

7. The information storage method as claimed in claim 6, wherein the preset information condition comprises:
the second structured information comprises a preset entity; and/or
the second structured information comprises a preset entity attribute.

8. The information storage method as claimed in claim 6 or 7, wherein storing the memorization information corresponding to the chat message in response to the second structured information satisfying the preset information condition, comprises:
in response to the second structured information satisfying the preset information condition, storing the chat message and the second structured information.

9. The information storage method as claimed in claim 8, wherein storing the chat message and the second structured information in response to the second structured information satisfying the preset information condition, comprises:
in response to the second structured information satisfying the preset information condition, storing the chat message and the second structured information in an associated manner.

10. The information storage method as claimed in claim 9, wherein after storing the chat message and the second structured information in the associated manner in response to the second structured information satisfying the preset information condition, the method further comprises:
in response to a second information query operation, querying, from stored memorization information, a chat message matching the second information query operation;
generating second query answer information according to second structured information associated with the queried chat message; and
outputting the second query answer information and the queried chat message.

11. The information storage method as claimed in any one of claims 2 to 10, wherein the method further comprises:
displaying a setting interface, wherein the setting interface is configured to set the preset keyword; and
in response to a setting operation in the setting interface, acquiring a set keyword as the preset keyword used to trigger the addition of memorization information.

12. The information storage method as claimed in any one of claims 1 to 11, wherein after storing the memorization information corresponding to the chat message in response to the chat message satisfying the memorization addition condition, the method further comprises:
displaying, based on the memorization information, response content information of the virtual session object in the chat interface, wherein the response content information is used to reply to the chat message, and prompt that the memorization information has been stored.

13. The information storage method as claimed in claim 12, wherein the response content information comprises question information used to query the memorization information, and displaying, based on the memorization information, response content information of the virtual session object in the chat interface, comprises:
generating the question information based on the memorization information; and
generating, based on the question information, the response content information, and displaying the response content information in the chat interface, wherein the response content information is used to reply to the chat message, and the response content information is further used to prompt that the memorization information has been stored and prompt that the memorization information is capable of being queried by using the question information.

14. The information storage method as claimed in any one of claims 1 to 13, wherein after storing the memorization information corresponding to the chat message in response to the chat message satisfying the memorization addition condition, the method further comprises:
displaying, based on the memorization information, a memorization card for the memorization information in the chat interface.

15. The information storage method as claimed in claim 14, wherein the memorization card comprises an editing control, and after displaying, based on the memorization information, the memorization card for the memorization information in the chat interface, the method further comprises:
in response to a first operation on the editing control, displaying an editing interface for the memorization information; and
in response to an editing operation for the memorization information in the editing interface, acquiring and storing edited memorization information.

16. The information storage method as claimed in claim 15, wherein before displaying the editing interface for the memorization information in response to the first operation on the editing control, the method further comprises:
in response to the memorization information satisfying a preset missing condition, displaying a first prompt message in the memorization card, wherein the first prompt message is used to prompt edition for the memorization information.

17. The information storage method as claimed in any one of claims 1 to 16, wherein after storing the memorization information corresponding to the chat message in response to the chat message satisfying the memorization addition condition, the method further comprises:
in response to a chat condition for the memorization information being met, displaying the chat interface configured to chat with the virtual session object, and displaying topic information corresponding to the memorization information in the chat interface, wherein the topic information is used to initiate a chat related to the memorization information.

18. An information storage apparatus, comprising:
a chat interface displaying module, configured to display a chat interface configured to chat with a virtual session object;
a chat message acquiring module, configured to acquire a chat message input in the chat interface; and
a memorization information storing module, configured to store, in response to the chat message satisfying a memorization addition condition, memorization information corresponding to the chat message.

19. An electronic device, comprising:
one or more processors;
a memory; and
one or more programs, wherein the one or more programs are stored in the memory and are configured to be executed by the one or more processors, and the one or more programs are configured to execute the information storage method as claimed in any one of claims 1 to 17.

20. A computer-readable storage medium having program codes stored thereon, wherein the program codes are callable by a processor to execute the information storage method as claimed in any one of claims 1 to 17.
